# EUROPÄISCHE PATENTANMELDUNG

(11) **EP 0 719 525 A1**
(43) Veröffentlichungstag der Anmeldung: **03.07.1996**
(21) Anmeldenummer: 94810755.2
(22) Anmeldetag: 29.12.1994
(51) Int. Cl.: A61C 9/00

(54) **Stift für die Herstellung von Zahn- und Kiefermodellen**

(71) Anmelder: Nordin, Harald E., CH-1822 Chernex (CH)
(72) Erfinder: Nordin, Harald E., CH-1822 Chernex (CH)
(74) Vertreter: AMMANN PATENTANWAELTE AG BERN

(57) **Zusammenfassung**

Der Stift für die Herstellung von Zahn- und Kiefer-Modellen weist ein Oberteil (2) zur Aufnahme einer Abdrucksektion und ein Steckteil (3) zum drehgesicherten Einstecken in einen Sockel auf, wobei die Längsachse (MO) des Oberteils (2) mit der Längsachse (MS) des Steckteils (3) einen von 0° verschiedenen Winkel bildet und das Oberteil (2) versetzt zum Steckteil angeordnet ist.

Ein solcher Stift bewirkt eine gute Drehsicherung, da die Kräfte auf den Zahn-Abdruck nicht direkt auf das Steckteil übertragen werden. In einer bevorzugten Ausführung wird der Stift aus Kunststoff hergestellt.

## Beschreibung

Die vorliegende Erfindung bezieht sich auf einen Stift für die Herstellung von Zahn- und Kiefermodellen gemäss Oberbegriff von Patentanspruch 1, wobei in der Regel ein einziger Stift für jede Zahn- oder Guss-Sektion verwendet wird. Derartige Stifte sind beispielsweise aus der EP-B-240 647 des gleichen Anmelders bekannt, bei dem es auch um die Drehsicherung solcher Stifte geht. Der Stift gemäss zitierter europäischer Patentschrift erfüllt zwar seine Aufgaben gut, ist jedoch in der Herstellung relativ aufwendig.

Es sind eine Anzahl von weiteren Stiften bekannt, die eine Drehsicherung in irgend einer Form enthalten, so z.B. aus der GB-B-866 118, bei dem das Steckteil sich konisch nach unten verjüngt, jedoch eine von einer kreisrunden Form verschiedene Ausgestaltung aufweist. Es sind ferner Stifte auf dem Markt vorhanden, deren konisch sich verjüngendes Steckteil eine Verflachung aufweist, um eine Drehsicherung zu bieten.

Allen bekannten Stiften ist gemeinsam, dass sich deren Oberteil und Steckteil auf einer gemeinsamen Achse befinden, wodurch sich ein Verdrehen der Zahnsektion unmittelbar auf das Steckteil überträgt.

Es ist davon ausgehend eine Aufgabe der vorliegenden Erfindung einen Stift anzugeben, der eine erhöhte Drehsicherung bewirkt. Diese Aufgabe wird mit einem Stift gemäss Patentanspruch 1 gelöst. Eine weitere Aufgabe, die Herstellung zu vereinfachen und zu verbilligen, wird dadurch gelöst, dass der ganze Stift aus Kunststoff hergestellt wird. Eine weitere Aufgabe, das Entfernen des vereinzelten Zahnmodells zu erleichtern, wird dadurch gelöst, dass auf dem Steckteil des erfindungsgemässen Stiftes eine Kunststoffkappe angeordnet ist.

Die Erfindung wird im folgenden anhand einer Zeichnung von Ausführungsbeispielen näher erläutert.
- Figuren 1 u. 2: zeigen einen erfindungsgemässen Stift in zwei verschiedenen Seitenansichten,
- Figur 3: zeigt einen Teil des Stiftes von Figur 1 mit einer Kappe im Schnitt, und
- Figur 4: zeigt einen Schnitt gemäss der Linie IV-IV in Figur 3.

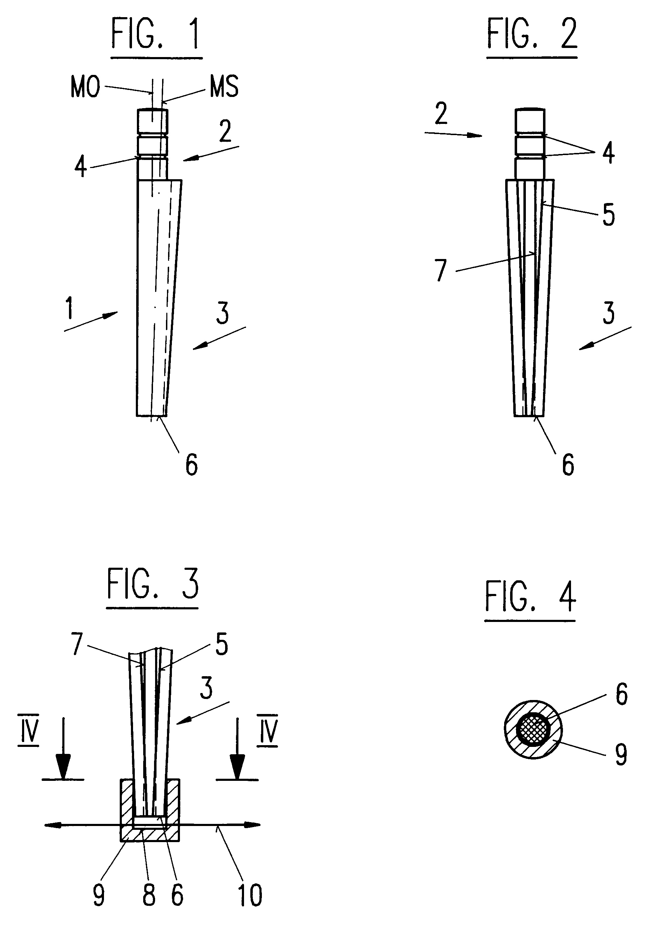

In Figur 1 erkennt man den Stift 1 mit dem Oberteil 2 und dem Steckteil 3. Das zylindrische Oberteil 2 mit den Querrillen 4 weist einen kleineren Durchmesser auf als der anschliessende Teil des Steckteils und ist diesem gegenüber versetzt angeordnet. Das Steckteil 3 ist als nach unten sich verjüngender Konus ausgebildet, jedoch bildet seine Mittelachse MS mit der Mittelachse MO des Oberteils einen von 0° verschiedenen Winkel. Diese beiden Massnahmen, Exzentrizität und geneigte Achsen, bewirken schon für sich allein eine gute Drehsicherung der Zahn- oder Gussform-Sektion, da eine Verdrehung der Zahnsektion nicht unmittelbar auf das Steckteil wirkt.

Als weitere Drehsicherung erkennt man in Figur 2, die den Stift in Bezug auf Fig. 1 um 90° um seine Achse gedreht darstellt, eine Nut 5, die gegenüber dem Oberteil, bzw. seiner Verlängerung angeordnet ist. Diese Nut wird, vom Steckteilende 6 aus gesehen, zum Oberteil hin breiter und, siehe Figur 1, auch tiefer. Am Boden dieser Nut 5 ist eine Längsrille 7 angeordnet, deren Breite vom Steckteilende 6 zum Oberteil hin zunimmt. Diese Rille bildet dann im Sockel einen positiven Wulst, der oben breiter ist als unten und dadurch ein besseres Herausnehmen der Zahnsektion ermöglicht.

Da die Längsachsen des Oberteils und des Steckteils nicht zusammenfallen, ist ein Herstellen durch Drehen solcher Teile sehr aufwendig und es ist daher zweckmässig, solche Stifte nach dem Druckgussverfahren zu giessen oder zu spritzen. Grundsätzlich können solche Stifte aus Metall hergestellt werden, doch ergibt sich eine kostengünstige Herstellung bei der Verwendung von geeignetem Kunststoff. Da solche Stifte in grossen Mengen verbraucht werden, ist eine kostengünstige Herstellung aus Kunststoff besonders vorteilhaft.

Bei der Herstellung solcher Zahnmodelle ergeben sich häufig Probleme dadurch, dass die Steckteilenden im Gipssockel nur schwer ermittelt werden können, und es sind verschiedene Hilfsmittel dazu vorbekannt, die allesamt entweder aufwendig oder nicht sehr wirksam sind. In vorliegendem Ausführungsbeispiel gemäss den Figuren 3 und 4 wird mit dem Stift eine Kunststoffkappe 9 eingegossen, die derart ausgebildet ist, dass zwischen dem Steckteilende 6 und der inneren Bodenfläche 8 der Kunststoffkappe ein kleiner Abstand vorhanden ist. Nach dem Giessen des Sockels wird dessen Boden abgeschliffen, bis auch der Boden der Kappe vollständig abgeschliffen ist, was durch den Pfeil 10 angedeutet ist, so dass das Steckteilende 6 sichtbar wird und die entsprechende Zahnsektion leicht mit einem spitzen Instrument herausgestossen werden kann.

Infolge der doppelten Drehsicherung durch die geneigt zueinander angeordneten Achsen des Oberteils und des Steckteils sowie durch die Längsnut ergibt sich eine geringe spezifische Beanspruchung des Steckteils, wodurch die ursprüngliche Präzision auch nach vielfachem Herausnehmen und Hineinstecken erhalten bleibt.

Der erfindungsgemässe Stift kann analog zum Verfahren gemäss EP-B 240 647 für die Herstellung von Modellen verwendet werden, wobei die Zahnsektion genau auf die Längsnut ausgerichtet wird.

## Patentansprüche

1. Stift für die Herstellung von Zahn- und Kiefer-Modellen, mit einem Oberteil (2) zur Aufnahme einer Abdrucksektion und einem Steckteil (3) zum drehgesicherten Einstecken in einen Sockel, dadurch gekennzeichnet, dass die Längsachse (MO) des Oberteils (2) mit der Längsachse (MS) des Steckteils (3) einen von 0° verschiedenen Winkel bildet und das Oberteil (2) versetzt zum Steckteil angeordnet ist.

2. Stift nach Anspruch 1, dadurch gekennzeichnet, dass das Steckteil (3) eine Längsnut (5) aufweist, deren Breite und Tiefe vom Oberteil (2) zum steckteilende (6) hin abnimmt und dass in der Nut (5) eine Rille (7) angeordnet ist, deren Breite vom Oberteil zum Steckteilende hin zunimmt.

3. Stift nach Anspruch 1 oder 2, dadurch gekennzeichnet, dass das Oberteil zylindrisch ist und Querrillen (4) aufweist und sich das Steckteil (3) zu seinem Ende (4) hin verjüngt.

4. Stift nach einem der Ansprüche 1 bis 3, dadurch gekennzeichnet, dass er nach dem Druck- oder Spritzguss-Verfahren hergestellt ist.

5. Stift nach Anspruch 4, dadurch gekennzeichnet, dass er aus Kunststoff hergestellt ist.

6. Stift nach einem der Ansprüche 1 bis 5, dadurch gekennzeichnet, dass an seinem Steckteil (3) eine Kunststoffkappe (9) angeordnet ist derart, dass zwischen dem Steckteilende (6) und dem Inneren (8) des Kappenbodens ein Zwischenraum vorhanden ist.
